# EUROPEAN PATENT APPLICATION

(11) **EP 4 166 919 A1**
(43) Date of publication of application: **19.04.2023**
(21) Application number: 22199543.4
(22) Date of filing: 04.10.2022
(51) Int. Cl.: G01L 23/22, G01L 1/16, G01H 1/00, F16B 43/02

(54) **KNOCKING SENSOR ASSEMBLY**

(30) Priority: 18.10.2021 GB 202114864
(71) Applicant: Caterpillar Energy Solutions GmbH, 68167 Mannheim (DE)
(72) Inventor: GUISASOLA, Inigo, 68167 Mannheim (DE)
(74) Representative: Nordmeyer, Philipp Werner

(57) **Abstract**

The present invention refers to a knocking sensor assembly (10) for an internal combustion engine, comprising a knocking sensor (20), a connecting element (22) configured to mount the knocking sensor (20) on the engine, and a structural interface (43) which, in a mounted state of the knocking sensor assembly (10), is provided between a head (26) of the connecting element (22) and the knocking sensor (20). The structural interface (43) is constituted by a curved first supporting surface (44) and a complementary designed second supporting surface (46).

## Description

### Technical Field

The present invention refers to a knocking sensor assembly for an internal combustion engine and a method for mounting and aligning such a knocking sensor assembly.

### Technological Background

For ensuring high efficiency, internal combustion engines are designed to combust an air fuel mixture within its cylinders in a timely controlled manner so as to, under ideal operating conditions, develop peak pressure in its cylinders at ideal time for maximum recovery of work from expanding gases generated upon combustion. For doing so, ignition of the air fuel mixture and propagation of a flame front within the combustion chamber has to take place according to a strictly defined pattern. However, any deviation from ideal operating conditions may lead to a less favorable combustion of the air fuel mixture and thus to a deterioration of the engine's performance and even to damages of the engine.

One particularly unfavorable and destructive failure condition is known as 'engine knocking' or 'knocking'. In general, 'engine knocking' refers to an operating condition of an internal combustion engine during which unintended and unfavorable combustion phenomena occur. Specifically, knocking may result when combustion of at least some of the air fuel mixture within a combustion chamber does not result from propagation of the flame front and thus explodes outside the normal combustion front.

For monitoring and detecting knocking phenomena during operation of an engine, the use of knocking sensors is known. Such knocking sensors are usually fitted to an outer surface of an engine block and may be configured to measure vibrations or sound waves to detect occurrence of knocking. Data obtained by such knocking sensors may then be used to take appropriate actions to counteract knocking, e.g., by adjusting engine control, such as ignition timing. Such knocking sensors are, for example, described in US 9,464,965 B2 and US 7,146,847 B2.

The transmission of vibrations and sound between a casing of the engine and the knocking sensor is particularly affected by the structural connection between these components. It has been found that even small changes or modifications as regards this structural connection may affect vibration or sound transmission and thus may change measurement results obtained by the knocking sensors. This usually results in a great effort when installing or maintaining knocking sensors to ensure predefined and constant monitoring conditions.

### Summary of the Invention

Thus, starting from the prior art, it is an objective to provide an improved knocking sensor assembly, which in particular simplifies installation of knocking sensors and makes it more reliably. A further objective is to provide a method for mounting and aligning such a knocking sensor assembly.

These objectives are solved by the subject matter of the independent claims. Preferred embodiments are set forth in the present specification, the Figures as well as the dependent claims.

Accordingly, a knocking sensor assembly for an internal combustion engine is provided. The knocking sensor assembly comprises a knocking sensor, a connecting element configured to mount the knocking sensor on the engine, and a structural interface which, in a mounted state of the knocking sensor assembly, is provided between a head of the connecting element and the knocking sensor. The structural interface is constituted by a curved first supporting surface and a complementary designed second supporting surface

Furthermore, a method is provided for mounting such a knocking sensor assembly on an internal combustion engine and for aligning the knocking sensor assembly relative to the engine. The method comprises the steps of: providing a knocking sensor and positioning the knocking sensor on the engine; providing a connecting element and a structural interface constituted by a curved first supporting surface and a complementary designed second supporting surface; and mounting the knocking sensor on the engine by fastening the connecting element to the engine such that the structural interface is arranged between a head of the connecting element and the knocking sensor.

Since the proposed method refers to the above described knocking sensor assembly, technical features described herein in the context of the knocking sensor assembly may refer and be applied to the method for mounting and aligning the knocking sensor assembly, and vice versa.

### Brief Description of the Drawings

The present disclosure will be more readily appreciated by reference to the following detailed description when being considered in connection with the accompanying drawings in which:
Fig. 1 schematically shows a longitudinal section of a knocking sensor assembly mounted on an internal combustion engine;
Fig. 2 schematically shows an exploded sectional view of the knocking sensor assembly depicted in Fig. 1;
Fig. 3 schematically shows a longitudinal section of a mounted knocking sensor assembly according to a further embodiment;
Fig. 4 schematically shows an exploded sectional view of the knocking sensor assembly depicted in Fig. 3;
Fig. 5 schematically shows a longitudinal section of a mounted knocking sensor assembly according to a further embodiment;
Fig. 6 schematically shows an exploded sectional view of the knocking sensor assembly depicted in Fig. 5; and
Figs. 7 to 9 schematically show individual method steps for mounting the knocking sensor assembly depicted in Fig. 1 on the engine.

### Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

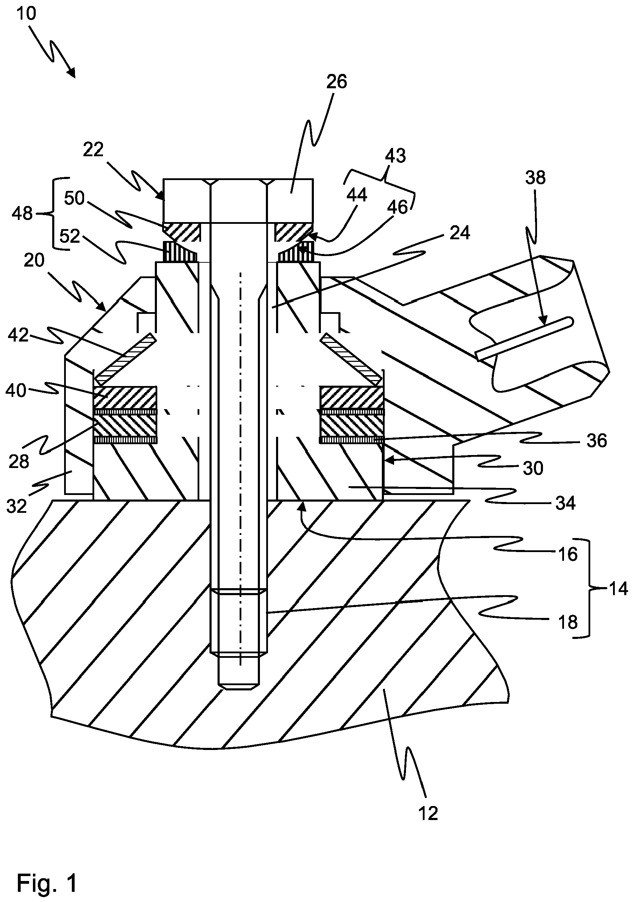

Figure 1 shows a knocking sensor assembly 10 in a mounted state in which it is mounted on a casing 12 of an internal combustion engine, also referred to as 'the engine' herein. The engine may be, e.g., a gas engine, a dual fuel engine or a diesel engine. Such an engine may be installed on a vehicle or vessel and may serve as a main or auxiliary engine. Specifically, the engine may be a spark ignited internal combustion engine, i.e. an engine in which an air fuel mixture present in a combustion chamber of the engine is ignited by a spark plug. The basic structure and mode of operation of such an engine and its components are well known to a person skilled in the art and are thus not further specified.

The casing 12 of the engine, on which the knocking sensor assembly 10 is mounted, may be an engine block or a cylinder head or a crankcase. In the shown configuration, the knocking sensor assembly 10 may be directly on an outer surface of the casing. In other word, in its mounted state, the knocking sensor assembly 10 is positioned at and lies against an outer surface of the casing 12. Specifically, as can be gathered from Fig. 1, the knocking sensor assembly 10 is positioned at and lies against a connecting interface 14, i.e. a structural interface, of the casing 12 comprising a supporting surface 16 and a mount for a connecting element that, in the shown configuration, is provided in the form of a threaded hole 18.

The knocking sensor assembly 10 comprises a knocking sensor 20 and a connecting element in the form of a screw 22 configured to mount the knocking sensor 20 to the casing 12 of the engine. Specifically, in the mounted state of the knocking sensor assembly 10 as depicted in Fig. 1, the knocking sensor 20 is force-fittingly connected to the casing 12 by the screw 22 such that a bottom of the knocking sensor 20 lies and is pressed against the supporting surface 16 of the casing 12.

In the context of the present disclosure, the term 'bottom' refers to parts or sections of the knocking sensor assembly 10 which are arranged in the vicinity of the engine or which face the engine, in particular the supporting surface 16 of its casing 12. Accordingly, the term 'top' refers to parts or sections of the knocking sensor assembly 10 which are arranged opposed to bottom parts or sections of the knocking sensor assembly 10.

Specifically, the knocking sensor 20 is provided with a through hole 24 which is intended and designed such that, in the mounted state of the knocking sensor assembly 10, the screw 22 passes through the through hole 24 to engage with the threaded hole 18, while a head 26 of the screw lies on a top portion of the knocking sensor 20 around the through hole 24. By such a configuration, upon screwing the screw 22 into the threaded hole 18, the screw 22 is tightened and thereby establishes the force-fitting connection between the knocking sensor 20 and the casing 12.

In the context of the present disclosure, the term 'knocking sensor 20', also referred to as 'knock sensor', relates to any sensor or device which is configured to measure a quantity related to or being indicative of knocking characteristics of the engine. For example, the knocking sensor 20 may be configured to measure vibrations or sound emissions generated during operation of the engine. Specifically, the knocking sensor 20 may be a vibration sensor having a piezo-ceramic element, also referred to as piezo-electric measurement element herein. Further, the knocking sensor 20 may be configured to forward the measured quantities, in particular in the form of electrical signals, to another device, such as an electronic control unit of the engine. Alternatively, the knocking sensor 20 may be configured to identify knocking phenomena, for example by identifying high-frequency engine vibrations or sound characteristic, and to transmit a signal, in particular to the electronic control unit, when such a knocking phenomenon has been identified. For identifying knocking phenomena, the knocking sensor 20 may be configured to analyze the measured quantities. In response to an identified knocking phenomenon, the electronic control unit may be configured to take appropriate measure to counteract knocking, such as adjusting ignition timing of the engine.

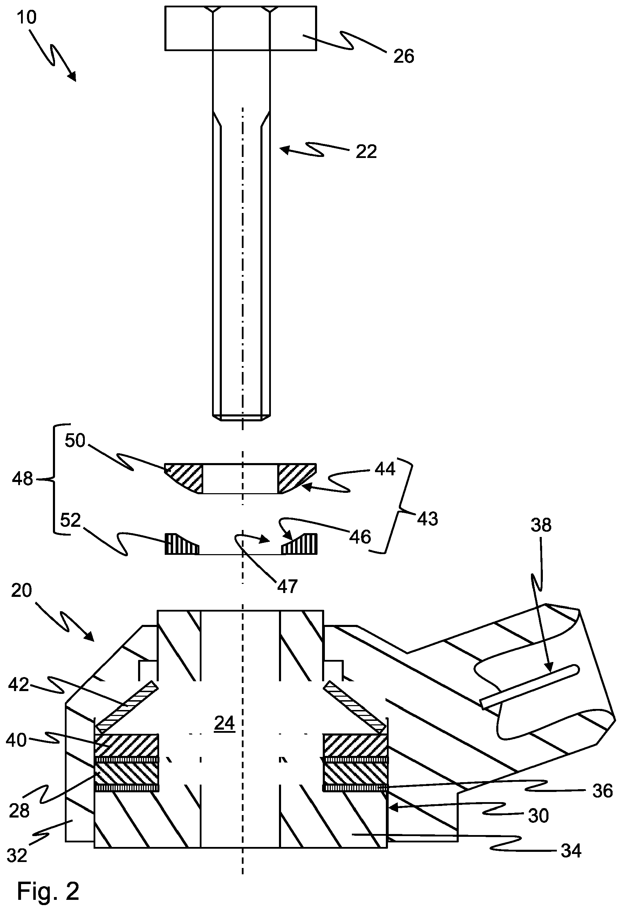

In the shown configuration, the knocking sensor 20 is configured to measure structure-born noise using a piezo-electric measurement element 28. In the following, with reference to Fig. 1 and 2, the structural arrangement of the knocking sensor 20 is specified. Specifically, the knocking sensor 20 comprises a mounting body 30 which is provided with the through hole 24 and a bottom surface of which constitutes a supporting surface which lies against the supporting surface 16 of the casing 12. The mounting body 30 constitutes a pressure sleeve to which a sensor housing 32 is attached. Specifically, the sensor housing 32 is pushed on the mounting body 38 such that it is arranged circumferentially around the mounting body. In the inside of the knocking sensor 20, which is delimited by an inner surface of the mounting body 30 and the sensor housing 32, the piezo-electric measurement element 28 is supported by a flange 34 of the mounting body 32 which extends radially around the through hole 24. Specifically, a bottom surface of the flange constitutes the bottom supporting surface of a knocking sensor 20 which lies against the supporting surface 16 of the casing 12, wherein the piezo-electric measurement element 28 lies against a top surface of the flange 34 which is arranged opposed to its bottom surface such that the piezo-electric measurement element 28 is arranged circumferentially around the through hole 24. A bottom and a top surface of the piezo-electric measurement element 28 are covered with conductive layers 36 from which electric lines (not shown) lead to an electronic evaluation unit (not shown) and from there to a connector 38 via which an electronic signal is forwarded to the electronic control unit (not shown) of the engine. The bottom conductive layer 36 in turn is covered at its bottom surface with an insulating layer (not shown), wherein the top conductive layer 36 at its top surface is covered with further insulating layer (not shown). On top of the piezo-electric measurement element 28, a seismic mass 40 is arranged around the mounting body 30 and thus around the through hole 24. In the shown arrangement of the knocking sensor 20, the sensor housing 32 clamps the seismic mass 40 against the piezo-electric measurement element 28 and thus against the mounting body 30 via a spring washer 42.

The knocking sensor assembly 10 further comprises a structural interface 43 which, in a mounted state depicted in Fig. 1, is provided between the screw head 26 and the knocking sensor 20. Specifically, the structural interface is configured to transfer holding forces between the screw 22 and the knocking sensor 24 for force-fittingly connecting the knocking sensor 20 to the engine. The structural interface 43 is constituted at least by a curved first supporting surface 44 and a complementary designed second supporting surface 46. In the mounted state, the first supporting surface 44 and the second supporting surface 46 lie against each other and are thus engaged.

In the context of the present disclosure, the term 'curved' refers to a geometry of a supporting surface which is curved or bent in at least in direction, preferably in more than one direction, and therefore is not flat.

In the shown configuration, the first supporting surface 44 is convexly shaped, i.e. the first supporting surface 44 bents outward. More specifically, the first supporting surface 44 is a spherical supporting surface, i.e. which has a spherical shape. In other words, the geometry of the first supporting surface may correspond to a geometry of at least a part of a sphere.

As set forth above, the second supporting surface 46 is designed complementary to the first supporting surface 44. That is, the structural arrangement of the second supporting surface 46 is designed to allow engagement with the first supporting surface 44. In other words, the second supporting surface 46 may be provided in any form which allows engagement with the first supporting surface 44. According to one configuration, the second supporting surface 46 may be provided or formed by an edge, in particular a circumferential edge extending circumferentially around the through hole 24. In the shown configuration, the second supporting surface 46 is provided in the form of a curved supporting surface. Specifically, the second supporting surface 46 is concavely shaped, i.e. the second supporting surface 46 bents inward. Further, as can be gathered from Fig. 2, the second supporting surface 46 is constituted by an outer surface of a conically shaped recess 47 provided in the knocking sensor assembly 10. In other words, the geometry of the recess 47 may correspond to the geometry of at least a part of a cone. Alternatively, the second supporting surface 46 may be constituted by an outer surface of a spherically shaped recess. In other words, the geometry of the spherically shaped recess may correspond to the geometry of at least a part of a sphere.

In the shown configuration, the first and the second supporting surface 44, 46 are designed such that, in the mounted state, they are arranged circumferentially around the connecting element 20. Since the first and the second supporting surface 44, 46 constitute the structural interface 43, the first and the second supporting surface 44, 46 are configured to transfer holding forces between the screw 22 and the knocking sensor 20 for force-fittingly connecting the knocking sensor 20 to the casing 12 of the engine.

The knocking sensor assembly 10 further comprises a washer unit 48 provided between a bottom of the screw head 26 and a top end of the knocking sensor 20, in particular the mounting body 30. Specifically, the washer unit 48 comprises a first washer in the form of a spherical washer 50 and a second washer in the form of a dished washer 52, as can be gathered from Fig. 2.

The spherical washer 50 has a flat first surface, also referred to as top surface of the spherical washer 50, and an opposed spherical second surface, also referred to as bottom surface of the spherical washer 50, which constitutes the first supporting surface 44. Thus, in the configuration shown in Fig. 1 and 2, the first supporting surface 44 is formed by the spherical washer 50, i.e. by its bottom surface.

The dished washer 52 has a recessed first surface, also referred to as the top surface of the dished washer 52, which constitutes the second supporting surface 46 and a flat second surface, also referred to as the bottom surface of the dished washer 52.

In the mounted state of the knocking sensor assembly 10, the top surface of the spherical washer 50 lies against the bottom of the screw head 26, the first supporting surface 44 formed by the bottom surface of the spherical washer 50 lies against the second supporting surface 46 formed by the top surface of the dished washer 52, and a bottom surface of the dished washer 52 lies against a top portion of the knocking sensor 20, in particular the mounting body 30.

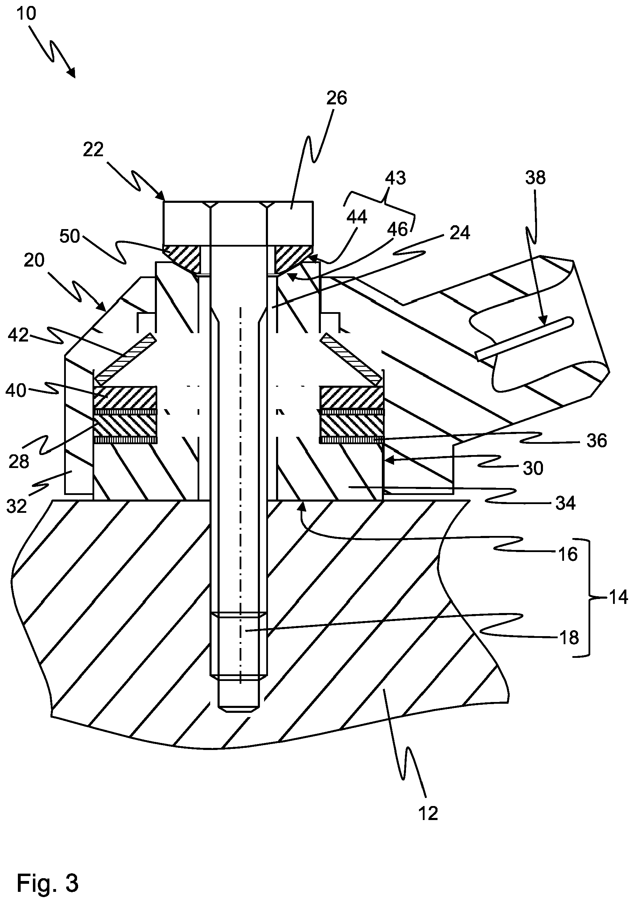

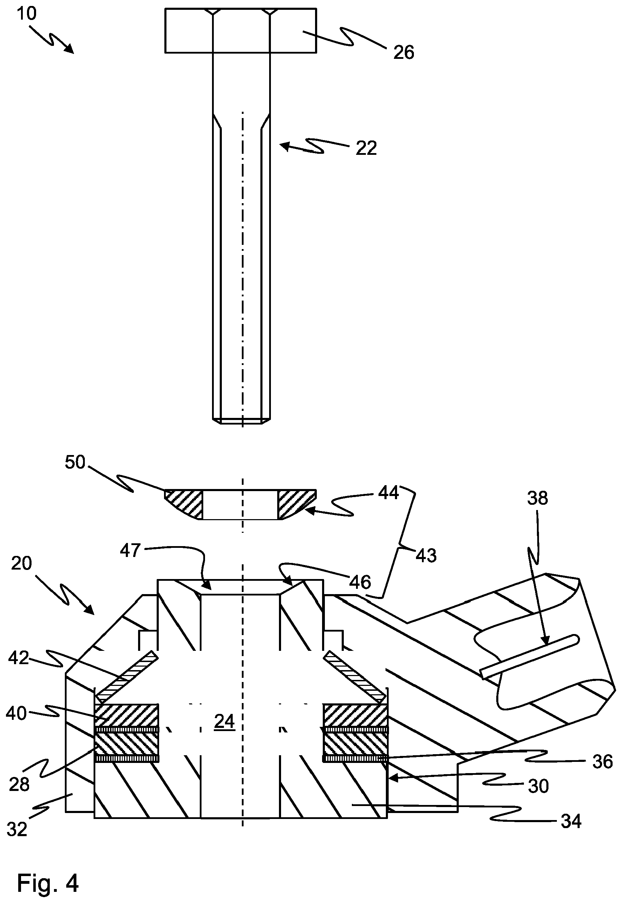

Fig. 3 and 4 show another embodiment of the knocking sensor assembly 10 in which, compared to the configuration of the knocking sensor assembly 10 depicted in Fig. 1 and 2, the second supporting surface 46 is formed by the knocking sensor 20, in particular by its mounting body 30, more particularly by the top portion and an end face of the mounting body 30. Accordingly, in this configuration, the dished washer 52 may be omitted.

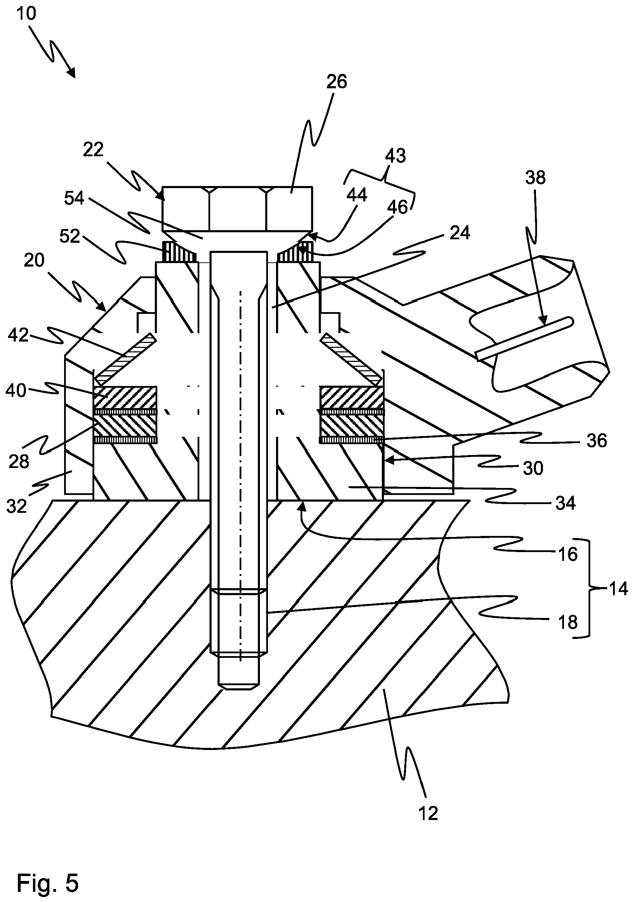

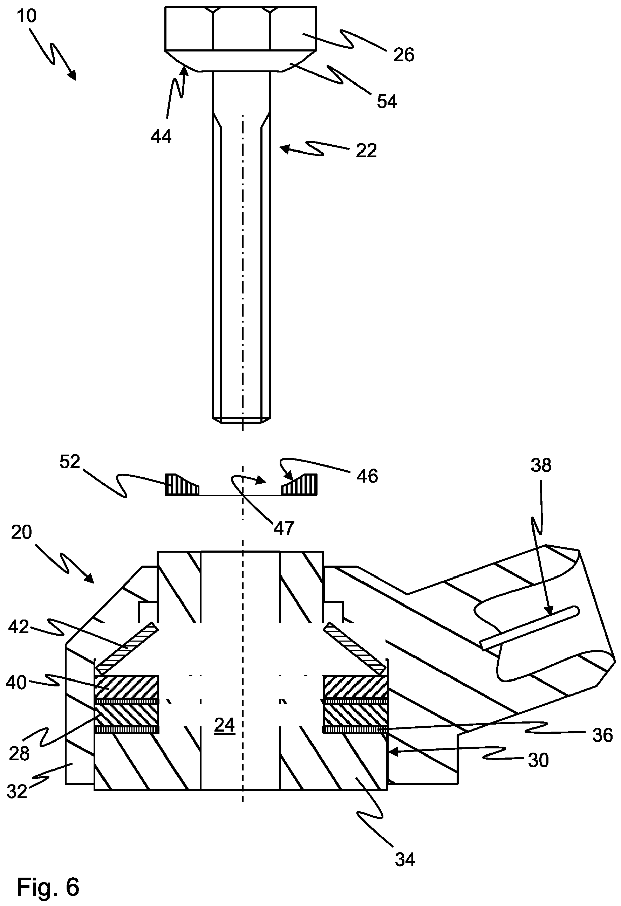

Fig. 5 and 6 show another embodiment of the knocking sensor assembly 10 in which, compared to the configuration of the knocking sensor assembly 10 depicted in Fig. 1 and 2, the first supporting surface 44 is formed by a screw seat, in particular by a spherical screw seat 54. The spherical screw seat 54 is arranged at a bottom of the screw head 26. Accordingly, compared to the configuration depicted in Fig. 1 and 2, the spherical washer 50 may be omitted.

Alternatively, in the configuration depicted in Fig. 5 and 6, the dished washer 52 forming the second supporting surface 46 may be omitted, wherein the second supporting surface may be formed by the knocking sensor 20, in particular by its mounting body 30, more particularly by the top portion and an end face of the mounting body 30 as implemented in the configuration shown in Fig. 3 and 4.

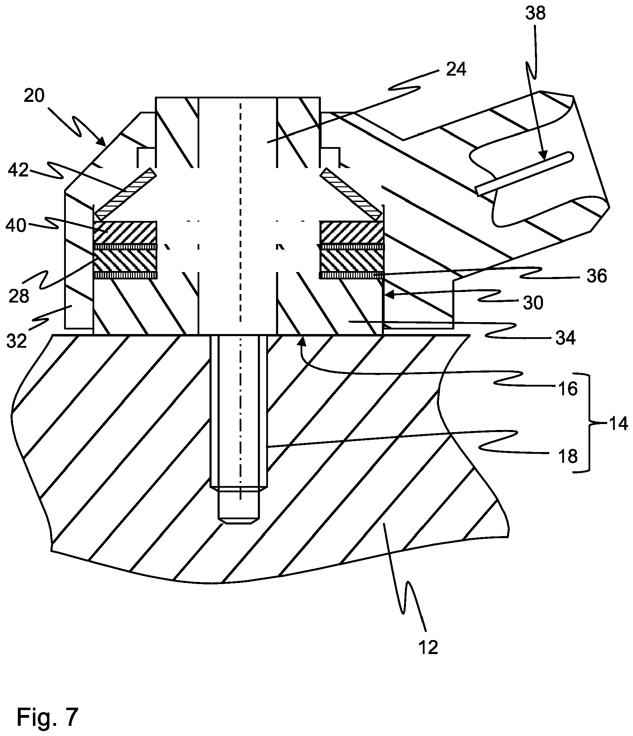

In the following, with reference to Figs. 7 to 9, a method is described for mounting a knocking sensor assembly 10, in particular a knocking sensor 20, to a casing 12 of an engine and for aligning the knocking sensor assembly 10, in particular the knocking sensor 20, relative to the casing 12. The method makes use of the above described knocking sensor assembly 10 and is described exemplary based on the configuration of the knocking sensor assembly 10 as depicted in Fig. 1 and 2, but may correspondingly be applied to any one of the herein-described configurations of the knocking sensor assembly 10.

In a first step of the method, the knocking sensor 20 is provided and positioned on the engine, in particular on the connecting interface 46 of its casing 12, as depicted in Fig. 7. Specifically, in this state, the knocking sensor 20 lies with its bottom surface, i.e. the bottom surface of the mounting body 30, against the supporting surface 16 of the casing 12 such that a longitudinal axis of the knocking sensor's through hole 24 coincides or substantially coincides with a longitudinal axis of the threaded hole 18 provided in the casing 12.

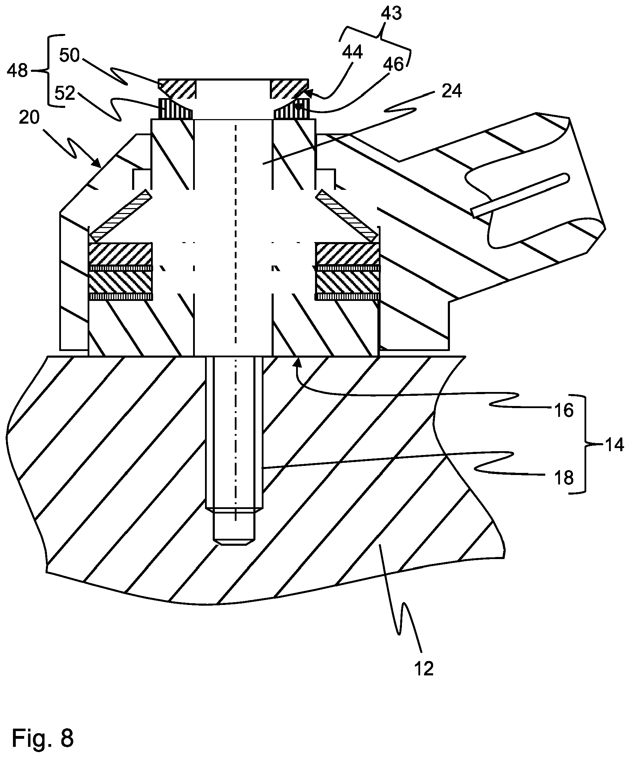

In a next step, the washer unit 48 is provided and therewith the structural interface 43 constituted by the curved first supporting surface 44 and the complementary designed second supporting surface 46. Specifically, the structural interface 43 and thus the washer unit 48 is placed on top of the mounting body 30 of the knocking sensor 20 such that a longitudinal axis of the spherical washer 50 and the dished washer 52 coincide or substantially coincide with the longitudinal axis of the through hole 24, as can be gathered from Fig 8.

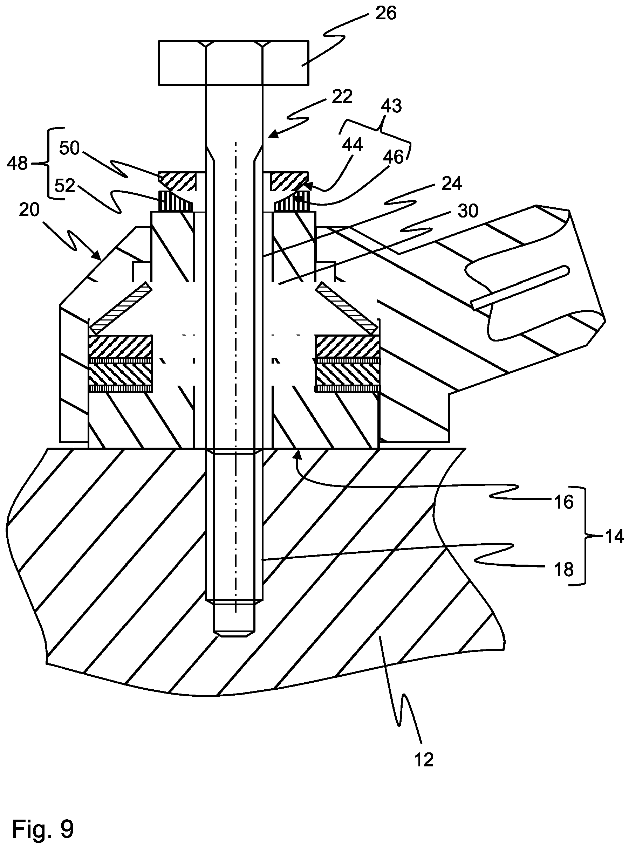

Then, the connecting element in the form of the screw 22 is provided and inserted through the washer unit 48 and the through hole 24 such that a front end of a threaded rod of the screw 22 engages with the threaded hole 18 of the casing 12, as depicted in Fig. 9.

Thereafter, the screw 22 is fastened and tightened until the screw head 26 exerts a holding force onto the knocking sensor 20 to mount, i.e. force-fittingly mount, the knocking sensor 20 on the engine such that the structural interface 43 is arranged between the screw head 26 and the knocking sensor 20. Specifically, for doing so, the screw 22 is tightened to a predefined torque.

Upon tightening the screw 22, the screw head 26 gets into close contact with the spherical washer 50 which, due to its first supporting surface 44, aligns relative to the screw head 26 and the second supporting surface 46. In other words, due to the first supporting surface 44, the screw head 26, the spherical washer 50, the dished washer 52 and the mounting body 30 are aligned upon tightening the screw 22, such that theses component lie flat against each other, respectively, thereby ensuring that the holding force exerted by the screw 22 is uniformly introduced, i.e. circumferentially around the through hole 24, into the knocking sensor 20 which in turn results in a uniform surface pressure at the structural interface between the knocking sensor 20 and the casing 12 of the engine. That is, the arrangement of the structural interface 43, in particular due to the curved first supporting surface 44 and the complementary designed second supporting surface 46, may cause that tightening the screw 22 induces alignment of the knocking sensor 20 relative to the engine. In other words, upon performing the step of fastening and tightening the screw 22, at the same time, a step of aligning the knocking sensor assembly 10, in particular the knocking sensor 20, relative to the engine may be induced.

In general, by virtue of the structural configuration of the knocking sensor assembly 10, particularly due to the curved first supporting surface 44 and the complementary designed second supporting surface 46, the proposed solution may ensure that the components of the knocking sensor assembly 10 lie flat against each other upon being tightened by the screw 22 which in turn may result in a uniform surface pressure at the structural interface between the knocking sensor 20 and the casing 12 of the engine. In this way, the installation of the knocking sensor 20 may be simplified and may be performed more reliably by technical personnel. For example, by such a structural configuration, structural deviations of the screw, such as an insufficient perpendicularity of its threaded rod relative to its head 26, i.e. being outside of given tolerances, may be effectively compensated so as to, even in the case of an insufficient perpendicularity of the screw 22, ensure that the knocking sensor 20 may be properly mounted on the casing 12 of the engine, i.e. with a uniform surface pressure therebetween allowing a proper and effective function of the knocking sensor 22.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

This is in particular the case with respect to the following optional features which may be combined with some or all embodiments, items and/or features mentioned before in any technically feasible combination.

A knocking sensor assembly for an internal combustion engine may be provided. The knocking sensor assembly may be intended for being mounted on a reciprocating engine, in particular a spark ignited internal combustion engine, such as a gas engine or a dual fuel engine. Such engines may be installed on a vehicle or a vessel.

The knocking sensor assembly may comprise a knocking sensor and a connecting element configured to mount the knocking sensor on the engine. The term "connecting element" in the sense of the present disclosure refers to any component configured to structurally connect the knocking sensor to the engine. Preferably, the connecting element is configured to force-fittingly connect the knocking sensor to the engine, in particular such that a predefined surface pressure is established at a connecting surface between the knocking sensor and the engine. For example, the connecting element may be a screw.

The knocking sensor preferably is a sensor configured to measure a quantity related to or being indicative of knocking characteristics of the engine. In addition, the knocking sensor may be configured to identify occurrence of knocking phenomena during operation of the engine based on the measured quantities. For example, the knocking sensor may be a vibration sensor.

The knocking sensor may be configured such that, in a mounted state of the knocking sensor assembly in which the knocking sensor assembly is mounted on the engine, the knocking sensor lies against the engine, in particular against a casing of the engine, such as a crankcase of the engine, more particularly against an outer surface of such a casing of the engine. Further, the knocking sensor may comprise at least one of: a vibration sensor, in particular a piezo-ceramic element; electric lines connected between the vibration sensor and an electrical connector; a seismic mass; and a spring washer.

Still further, the knocking sensor may comprise a mounting body via which the knocking sensor is structurally coupled to the engine. In other words, in the mounted state of the knocking sensor assembly, the mounting body may be in close contact, in particular in direct contact, with the engine, in particular an outer surface of its casing. As such, the mounting body may be configured for structurally coupling the knocking sensor to the engine. Further, the mounting body of the knocking sensor may be provided for supporting individual parts of the knocking sensor. Further, the mounting body may be designed such that, in the mounted state of the knocking sensor assembly, it is coupled to the connecting element in a force-transmitting manner. In this way, in the mounted state of the knocking sensor assembly, the connecting element may be configured to exert holding forces onto the mounting body so as to force-fittingly connect the knocking sensor 20 to the engine. Preferably, by the holding forces, the mounting body of the knocking sensor may be pressed against the engine.

Optionally, the knocking sensor, in particular its mounting body, may be provided with a through hole. In the mounted state of the knocking sensor assembly, the connecting element may pass through the through hole. In other words, in the mounted state of the knocking sensor assembly, a part of the connecting element is accommodated within the through hole.

The knocking sensor assembly may further comprise a structural interface which, in the mounted state of the knocking sensor assembly, is provided between a head of the connecting element and the knocking sensor. Specifically, the structural interface is constituted by a curved first supporting surface and a complementary designed second supporting surface. In the mounted state of the knocking sensor assembly, the first supporting surface and the second supporting surface may lie against each other. Further, the structural interface may be configured to transfer holding forces between the connecting element and the knocking sensor for force-fittingly connecting the knocking sensor to the engine.

By being provided with the structural interface constituted by the curved first supporting surface, the proposed knocking sensor assembly may ensure that components of the knocking sensor assembly, upon being tightened by the connecting element, lie flat against each other, thereby allowing for uniformly exerting the holding forces onto the knocking sensor. This may cause, in turn, that a uniform surface pressure is provided at a connecting interface between the knocking sensor and the engine, thereby contributing to a proper transmission of sounds and vibrations and thus to a proper operation of the knocking sensor. In this way, the installation of the knocking sensor may be simplified and may be performed more reliably by technical personnel.

Specifically, the curved first supporting surface may be convexly shaped. In other words, the curved first supporting surface may be a convex supporting surface. More specifically, the curved first supporting surface may be spherically shaped. In other words, the curved first supporting surface may form a part of an outer surface of a sphere. As such, the curved first supporting surface may be a spherical supporting surface.

Alternatively or additionally, the second supporting surface may be concavely shaped. In other words, the second supporting surface may be a concave supporting surface. More specifically the second supporting surface may be constituted by an outer surface of a recess, in particular of a conically or spherically shaped recess, provided in the knocking sensor assembly, in particular the mounting body.

Alternatively or additionally, in the mounted state of the knocking sensor assembly, the first and/or the second supporting surface may be arranged around, in particular circumferentially around, the connecting element.

According to one configuration, the first supporting surface may be formed by a washer, in particular by a spherical washer. Specifically, in the mounted state, the washer may be arranged between the head of the connecting element and the knocking sensor, in particular the mounting body of the knocking sensor.

Alternatively or additionally, the first supporting surface may be formed by a bottom surface of the screw head facing the knocking sensor in the mounted state. Specifically, the first supporting surface may be formed by a screw seat, in particular by a curved or convexly shaped or spherical screw seat.

The second supporting surface may be formed by or be provided at the knocking sensor. Specifically, the second supporting surface may be formed by or be provided at the mounting body of the knocking sensor, in particular at a top portion of the mounting body. The second supporting surface may connect a front surface of the mounting body to an inner surface of the through hole.

Alternatively or additionally, the second supporting surface may be formed by or be provided at a dished washer of the knocking sensor assembly. In the mounted state of the knocking sensor assembly, the dished washer may be arranged between the knocking sensor and the curved first supporting surface.

Furthermore, a method may be provided for mounting the above described knocking sensor assembly on an engine and for aligning the knocking sensor assembly relative to the engine. The method may comprise the steps of: providing a knocking sensor and positioning the knocking sensor on the engine; providing a connecting element and a structural interface constituted by a curved first supporting surface and a complementary designed second supporting surface; and mounting the knocking sensor on the engine by fastening the connecting element to the engine such that the structural interface is arranged between a head of the connecting element and the knocking sensor. The step of fastening the connecting element may be performed such that the connecting element is tightened at a predefined torque. Further, the step of fastening the connecting element may be performed such that, upon tightening the connecting element, the curved first supporting surface aligns components of the knocking sensor assembly relative to one another and/or relative to the engine.

### Industrial Applicability

With reference to the Figures and their accompanying description, a knocking sensor assembly and a method for mounting such a knocking sensor assembly are suggested. The suggested knocking sensor assembly may replace conventional knocking sensor assemblies and may serve as a replacement or retrofit part.

## Claims

1. Knocking sensor assembly (10) for an internal combustion engine, comprising a knocking sensor (20), a connecting element (22) configured to mount the knocking sensor (20) on the engine, and a structural interface (43) which, in a mounted state of the knocking sensor assembly (10), is provided between a head (26) of the connecting element (22) and the knocking sensor (20),
**characterized in that**
the structural interface (43) is constituted by a curved first supporting surface (44) and a complementary designed second supporting surface (46).

2. Knocking sensor assembly according to claim 1, wherein the connecting element is a screw (22).

3. Knocking sensor assembly according to claim 1 or 2, wherein the knocking sensor (20) is provided with a through hole (24) which is designed such that, in the mounted state, the connecting element (22) passes through the through hole (24).

4. Knocking sensor assembly according to any one of claims 1 to 3, wherein the structural interface (43) is configured to transfer holding forces between the connecting element (22) and the knocking sensor (20) for force-fittingly connecting the knocking sensor (20) to the engine.

5. Knocking sensor assembly according to any one of claims 1 to 4, wherein in the mounted state, the first supporting surface (44) and the second supporting surface (46) lie against each other.

6. Knocking sensor assembly according to any one of claims 1 to 5, wherein the first supporting surface (44) is convexly shaped.

7. Knocking sensor assembly according to any one of claims 1 to 6, wherein the first supporting surface is a spherical supporting surface (44).

8. Knocking sensor assembly according to any one of claims 1 to 7, wherein the second supporting surface (46) is concavely shaped.

9. Knocking sensor assembly according to any one of claims 1 to 8, the second supporting surface (46) is constituted by an outer surface of a conically or spherically shaped recess provided in the knocking sensor assembly.

10. Knocking sensor assembly according to any one of claims 1 to 9, wherein in the mounted state, at least one of the first and the second supporting surface (44, 46) are arranged circumferentially around the connecting element (20).

11. Knocking sensor assembly according to any one of claims 1 to 10, wherein the first supporting surface (44) is formed by a washer (50), in particular a spherical washer.

12. Knocking sensor assembly according to any one of claims 1 to 10, wherein the first supporting surface (44) is formed by a screw seat (54).

13. Knocking sensor assembly according to any one of claims 1 to 12, wherein the second supporting surface (46) is formed by the knocking sensor (20).

14. Knocking sensor assembly according to any one of claims 1 to 12, wherein the second supporting surface (46) is formed by a dished washer (52).

15. Method for mounting a knocking sensor assembly (10) on an internal combustion engine and for aligning the knocking sensor assembly (10) relative to the engine, comprising the steps of:
- providing a knocking sensor (20) and positioning the knocking sensor (20) on the engine;
- providing a connecting element (22) and a structural interface (43) constituted by a curved first supporting surface (44) and a complementary designed second supporting surface (46); and
- mounting the knocking sensor (20) on the engine by fastening the connecting element (22) to the engine such that the structural interface (43) is arranged between a head (26) of the connecting element (22) and the knocking sensor (20).
